# EUROPEAN PATENT SPECIFICATION

(11) **EP 3 907 120 B1**
(45) Date of publication and mention of the grant of the patent: **30.10.2024**
(21) Application number: 20172978.7
(22) Date of filing: 05.05.2020
(51) Int. Cl.: B61L 3/12, H04L 27/04, H04L 27/10, H04L 27/12

(54) **BALISE, METHOD OF OPERATING A BALISE, AND RAILWAY INFRASTRUCTURE**
BALISE, VERFAHREN ZUM BETRIEB EINER BALISE UND EISENBAHNINFRASTRUKTUR
BALISE, PROCÉDÉ DE FONCTIONNEMENT D'UNE BALISE ET INFRASTRUCTURE FERROVIAIRE

(43) Date of publication of application: 10.11.2021
(73) Proprietor: ALSTOM Holdings, 93400 Saint-Ouen-sur-Seine (FR)
(72) Inventor: REHN, Anders, 181 56 Lidingö (SE)
(74) Representative: Bjerkén Hynell KB

(56) References cited:
- GB-A- 2 441 227
- US-A- 5 347 280

## Description

### TECHNICAL FIELD

The present invention relates to a balise, a method of operating a balise, and a railway infrastructure comprising a plurality of balises. A balise is a type of stationary electronic transponder located between the rails of a railway track typically as a part of an automatic train protection, ATP, system and it communicates wirelessly with passing trains. The balise disclosed herein is intended to allow operability both in a European Rail Traffic Management System (ERTMS), as a Eurobalise, and in a KER or KVB System, as a KER balise, sometimes referred to as a KVB balise or a serial balise. As a Eurobalise, it forms an integral part of the European Train Control System.

### BACKGROUND AND REALTED ART

There are on-going efforts to provide for train traffic to pass borders between countries or regions having different train protection systems. To this end, UK Patent 2441227 discloses a communication balise aiming to provide operability according to both Eurobalise system specification and KER/KVB system specification. Combining such fundamentally different specifications in a single balise means that it must have two different operational modes. In the different systems, the signals exchanges with the passing train are different. This is a common situation: Non-modulated signals or signals having toggling modulation from the train in the Eurobalise case, which requires Frequency Shift Keying (FSK) response signal from the balise. Signals having non-toggling modulation from the train in the KER/KVB case, which requires Amplitude Shift Keying (ASK) response signal from the balise. Considering the aspiration in UK Patent 2441227 to provide such a balise having shared components in a common housing, there is a further need for balise circuitry that could allow this.

### SUMMARY OF INVENTION

To meet the further need in the prior art, the invention provides a balise suitable to be arranged fixedly between rails of a railway track to wirelessly communicate with a vehicle communication device of a railway vehicle on the railway track, the balise comprising: a receiver having a receiver loop and being configured to receive from the vehicle communication device via the receiver loop a receive signal having first receive signal characteristics or second receive signal characteristics different to said first receive signal characteristics; the receiver having energy storage circuitry configured to tap energy from the receive signal for powering the balise and having a detector configured provide an indication of whether the receive signal has the first receive signal characteristics or the second receive signal characteristics; a transmitter having a transmitter loop and being configured to transmit to the vehicle communication device via the transmitter loop a first telegram signal in a Frequency Shift Keying (FSK) operational mode according to the Eurobalise specification or a second telegram signal in a Amplitude Shift Keying (ASK) operational mode according to the KER/KVB specification; the transmitter having a variable capacitance, which forms a resonant circuit together with the transmitter loop, an active feedback circuitry having an input and an output both coupled to the resonant circuit, and a switch to selectively short-circuit the input of the active feedback circuitry to render the active feedback circuitry inactive; a controller configured to cause variation of the variable capacitance of the transmitter to attain the FSK operational mode and to cause the switch to short-circuit the input of the active feedback circuitry to attain the ASK operational mode. In the balise, the switch may have a solid-state switch component to short-circuit the input of the active feedback circuitry. Preferably, this component comprises a field effect transistor. These solutions provide the advantage of fast switching in combination with a low impedance. The short-circuiting typically means connecting to signal ground.

In the active feedback circuitry of the balise, there may be included a limiter configured to limit and stabilize oscillation amplitudes in the resonant circuit, preferably in combination the active feedback circuitry having at its input a capacitance in series between the resonant circuit and the switch. These features contribute to providing the advantage of keeping a transmission signal of the first telegram within specification in the FSK operational mode. Specifically, the short-circuiting of the input of the active feedback circuitry coupled to the resonant circuit via the (serial) capacitance C_{L} ensures for the resonant circuit a high impedance load with a high Q value, which is essential for keeping a transmission signal of the first telegram within specification in the ASK operational mode.

In the balise, the controller preferably attains the FSK operational mode in response to the detector providing the indication that the receive signal has the first receive signal characteristics of no modulation of the receive signal, as detected by the detector, whereas the same controller preferably attains the ASK operation mode in response to the detector provides the indication that the receive signal has the second receive signal characteristics of non-toggling modulation of the receive signal, as detected by the detector.

Further, in the balise, the receive signal detectably having toggling modulation preferably implies that the receive signal has the first receive signal characteristics. Alternatively, this implies that the receive signal has the second receive signal characteristics.

The balise may be operated according to Eurobalise specification in FSK operation mode in case the receive signal has first receive signal characteristics of no modulation or toggling modulation. This means that the balise transmits the first telegram in response to the first receive signal characteristics within a strict specification for Eurobalises by means of the shared circuitry of the inventive balise. In this disclosure, operation according to Eurobalise specification defines at least Eurobalise electric parameters of the receive signals, Eurobalise electrical parameters of the transmit signal, and format of the second telegram. A Eurobalise should comply with the standardization document "SUBSET-036: Specification for Eurobalises". The standard Eurobalise Transmission System, SUBSET-036, Issue 3.1.0, is incorporated in this disclosure through this reference.

The balise may be operated according to KER/KVB specification in ASK operation mode in case the receive signal has second receive signal characteristics of non-toggling modulation. This means that the balise transmits the second telegram in response to the second receive signal characteristics within a strict specification for KER/KVB balises by means of the shared circuitry of the inventive balise. In this disclosure, operation according to KER/KVB specification defines at least KER/KVB electric parameters of the receive signals, KER/KVB electrical parameters of the transmit signal, and format of the second telegram. A relevant KER/KVB balise specification is UNISIG SUBSET-100, which could be retrieved from the European Railway Agency.

There is further provided an advantageous method of operating a balise to be arranged fixedly between rails of a railway track to communicate wirelessly with a vehicle communication device of a railway vehicle on the railway track. This method comprises: providing a receiver having a receiver loop and receiving in the receiver from the vehicle communication device via the receiver loop a receive signal having first receive signal characteristics or second receive signal characteristics different to said first receive signal characteristics; providing in the receiver a detector providing an indication of whether the receive signal has the first receive signal characteristics or the second receive signal characteristics; providing a transmitter having a transmitter loop and transmitting from the transmitter to the vehicle communication device via the transmitter loop a first telegram signal in a Frequency Shift Keying (FSK) operational mode according to the Eurobalise specification or a second telegram signal in a

Amplitude Shift Keying (ASK) operational mode according to the KER/KVB specification; providing in the transmitter a variable capacitance, which forms a resonant circuit together with the transmitter loop, an active feedback circuitry having an input and an output both coupled to the resonant circuit, and a switch selectively short-circuiting the input of the active feedback circuitry to render the active feedback circuitry inactive; providing a controller varying the variable capacitance of the transmitter to operate in the FSK operational mode or switching to short-circuit the input of the active feedback circuitry to operate in the ASK operational mode. The method provides the same or similar advantages to use of the inventive balise. Preferably, the method also involves operating the balise according to Eurobalise specification in FSK operation mode in case the receive signal has first receive signal characteristics of no modulation or toggling modulation; operating the balise according to KER balise specification in ASK operational mode in case the receive signal has second receive signal characteristics of non-toggling modulation.

Huge advantages arise by providing a railway infrastructure comprising rails and a plurality of inventive balises fixedly arranged in a corresponding plurality of locations between the rails. This will allow traffic in a single integrated railway infrastructure by vehicles equipped for different Automatic Train Protection, ATP, systems.

### BRIEF DESCRIPTION OF THE DRAWINGS

Fig. 1 shows how inventive balises are conventionally arranged on sleepers of a railway forming part of a larger railway infrastructure.
Fig. 2 shows a functional block diagram of a balise according to the present invention.
Fig. 3 shows a functional block diagram of a transmitter of a balise according to the present invention.
Fig. 4 shows a functional block diagram of part of an active feedback circuitry of a transmitter of a balise according to the present invention.
Fig. 5 show a flow diagram of a method according to the present invention.

### DESCRIPTION OF INVENTION EMBODIMENTS

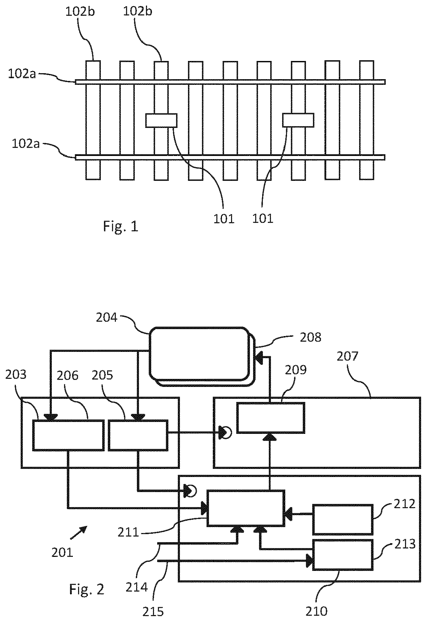

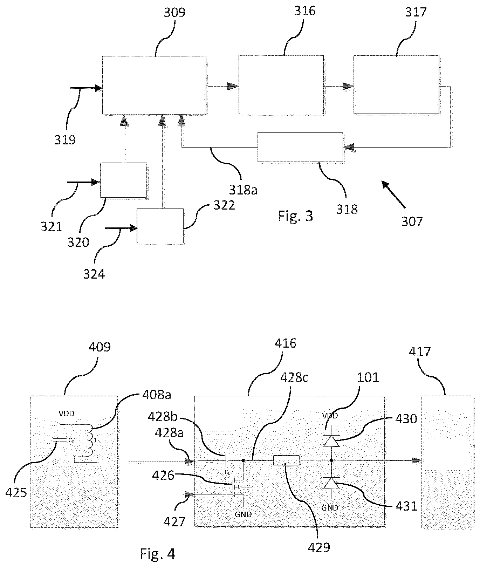

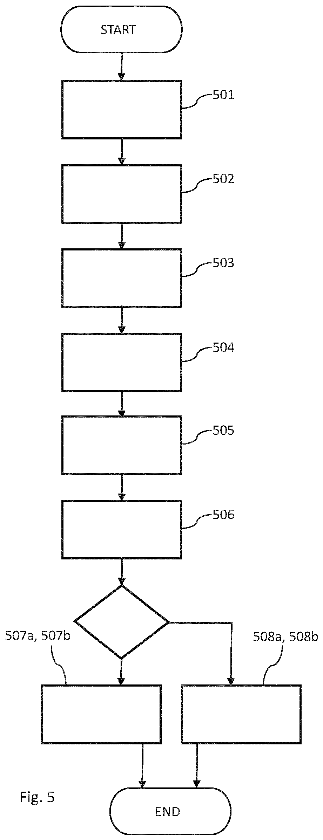

The drawings show details of a balise, a method of operating a balise, and a railway infrastructure disclosed herein. Reference numerals in the drawings are all three-digit numerals, wherein the first digit, being 1-5, indicates to which one of fig. 1 - fig. 5, respectively, that a certain numeral pertains. The second and third digits are the same for corresponding items in different figures. Any exception to this convention would be pointed out explicitly below.

Figs. 1-4 show a balise 101, 201 to be arranged fixedly between rails 102a on sleepers 102b of a railway track to wirelessly communicate with a conventional vehicle communication device (not shown) carried by a railway vehicle on the railway track, at a time when this vehicle passes the balise 101, 201. The balise has a receiver 203 having a receiver antenna loop 204 and is configured to receive from the vehicle communication device via the receiver loop 204 a receive signal having first receive signal characteristics, such as those intended for a Eurobalise, or second receive signal characteristics, such as those intended for KER balise. The second receive signal characteristics are fundamentally different to said first receive signal characteristic. The receiver 203 has energy storage circuitry 205 configured to tap energy from the receive signal for providing electrical powering in the balise 101, 201. The receiver 203 also has a detector 206 configured provide an indication of whether the receive signal has the first receive signal characteristics or the second receive signal characteristics. This is to say that the detector 206 determines, for instance, whether the passing railway vehicle communicates according to Eurobalise specification or KER balise specification, based on detection of the receive signal.

The balise 101, 201 has a transmitter 207, 307 having a transmitter antenna loop 208 and is configured to transmit to the vehicle communication device via the transmitter loop 208 either a first telegram signal in a Frequency Shift Keying, FSK, operational mode or a second telegram signal in a Amplitude Shift Keying, ASK, operational mode. The transmitter 207, 307 has a variable capacitance 425 (C_{R}), which forms a resonant circuit 209, 309, 409 together with the transmitter loop 208, 408a (L_{R}), an active feedback circuitry 316, 416, 317, 417, 318 having an input and an output both coupled to the resonant circuit 209, 309, 409, and a switch 426 to selectively short-circuit the input 428a of the active feedback circuitry 316, 416, 317, 417, 318 to render the active feedback circuitry inactive. The active feedback circuitry 316, 416, 317, 417, 318 typically includes a series-connection of a limiter 316, 416, which provides its input 428a, 428c, an amplifier 317, 417, and a feedback network 318 providing its output 318a coupled to the resonant circuit 209, 309, 409. A controller 211 is provided, which is capable of causing variation of the variable capacitance 425 of the transmitter to attain FSK of the first telegram in the FSK operational mode, while the active feedback circuitry 316, 416, 317, 417, 318 is activated. Alternatively, the controller 211 causes the switch 426 to short-circuit the input 428c of the active feedback circuitry 316, 416, 317, 417, 318 to attain the ASK operational mode. In ASK operational mode, preferably, an output of the amplifier 317, 417 of the active feedback circuitry 316, 416, 317, 417, 318 is short-circuited (similarly to the input 428c), by the controller exerting control or simply as a result of the short-circuiting of the input 428c. It should be noted that for performance purposes the inductance 408a (L_{R}) of the resonant circuit 209, 309, 409 is preferably made up of the transmitter loop 208 and at least one additional inductive component (not shown separately). This component is applied to render the transmitter 207, 307 less sensitive to the environment.

The variable capacitance 425 is typically only switchably variable between two fixed values for the purposes herein of forming and transmitting the first telegram signal in the FSK operational mode.

The first telegram is typically different from the second telegram and both are stored in a data memory of the balise 101, 201.

In a preferred embodiment, the balise 101, 201 has a single receiver loop 204 and a single transmitter loop 208, which are both used in the each of the operational modes of the balise. Moreover, these loops 204, 208 are constituted by conductive patterns on a printed circuit board together with other electric circuits and components of the inventive balise 101, 201.

The resonant circuit 309 further has coupled to it, in a conventional way for KER balises, an ASK trigger circuit 320 operated by the controller 211 via an ASK data connection 321.

The resonant circuit 309 further has coupled to it, in a conventional way for Eurobalises, a FSK initial trigger circuit 322 operated by the controller 211 via a FSK power on connection 324.

The switch 426 has a solid-state switch, preferable a FET, component to short-circuit the input 428c of the active feedback circuitry 316, 416, 317, 417, 318, at the control of the controller 211 via connection 427. This is important for selectively "converting" the electronics of the balise to act in ASK operational mode by "deactivating" active feedback.

The active feedback circuitry 316, 416, 317, 417, 318 has a limiter 316, 416 configured to limit and stabilize oscillation amplitudes in the resonant circuit 209, 309, 409. This is also important for rendering a favourable transmit (telegram) signal behaviour when the controller 211 has selected FSK operational mode and, thus, not short-circuiting the active feedback circuitry 316, 416, 317, 417, 318. In ASK operational mode, the short-circuiting of the input 428c essentially decouples the limiter 316, 416 from the resonant circuit 209, 309, 409 or at least significantly reduces its influence thereon. This result is important for maintaining performance in the ASK operational mode. In further providing suitable characteristics of the input 428a, 428c of the active feedback circuitry 316, 416, 317, 417, 318, its input 428c is provided with a capacitance 428b (C_{L}) in series between the resonant circuit 209, 309, 409 and the switch 426. The actual "limiting" in the limiter 316, 416 is essentially provided by a pair of diodes 430, 431 connected to supply voltage (VDD) and signal ground (GND), respectively, coupled to the switch 426 by an impedance 429. The switch 426 is configured when short-circuiting the input 428c by coupling the input to signal ground (GND).

Further, the controller 211 of the inventive balise 101, 201 is located in a logic block 210. The controller 211 has a serial link input 214 and connections to a sync error bit pattern module 212 and to a default telegram module 213, which in turn has a programming interface connection 215. The controller 211 typically has includes a processor and associated data memory.

The controller 211 attains the FSK operation mode in response to the detector 206 providing the indication that the receive signal has the first receive signal characteristics being no-modulation or toggling modulation.

The controller 211 attains the ASK operation mode in response to the detector 206 provides the indication that the receive signal has the second receive signal characteristics being non-toggling modulation.

Expressed slightly differently in a similar embodiment, the controller 211 is configured to attain the FSK operational mode in response to the detector 206 providing the indication that the receive signal has the first receive signal characteristics. The receive signal detectably, by the detector 206, having no modulation implies that the receive signal has the first receive signal characteristics. Further, the controller 211 is configured to attain the ASK operational mode in response to the detector 206 providing the indication that the receive signal has the second receive signal characteristics. The receive signal detectably, by the detector 206, having non-toggling modulation implies that the receive signal has the second receive signal characteristics.

In addition thereto, there are two mutually excluding alternatives in case the receive signal detectably, by the detector 206, has toggling modulation. This either implies that the receive signal has the first receive signal characteristics or it implies that the receive signal has the second receive signal characteristics. Which alternative is preferable may depend on requirements in a specific railway network in which the inventive balises are to be used.

To summarize, the dual mode balise of the disclosed embodiment enables operating the balise 101, 201 according to Eurobalise specification in FSK operational mode in case the receive signal has first receive signal characteristics of no modulation or toggling modulation or operating the balise 101, 201 according to KER balise specification in ASK operational mode in case the receive signal has second receive signal characteristics of non-toggling modulation. As an alternative embodiment, for both the balise and the method, the balise 101, 201 is operated according to KER balise specification in ASK operational mode in case the receive signal has first receive signal characteristics of toggling modulation, and thus not according to Eurobalise specification in FSK operational mode.

Naturally, some circuitry solutions conventionally found in a Eurobalise or a KER balise are present in the inventive balise but will not be described in detail herein.

An embodiment includes a method of operating a balise 101, 201 to be arranged fixedly between rails 102a of a railway track to wirelessly communicate with a vehicle communication device of a railway vehicle on the railway track, the method comprising the steps of:
providing 501 a receiver 203 having a receiver loop 204 and receiving in the receiver 203 from the vehicle communication device via the receiver loop 204 a receive signal having first receive signal characteristics or second receive signal characteristics different to said first receive signal characteristics;
providing 502 in the receiver 203 a detector 206 providing an indication of whether the receive signal has the first receive signal characteristics or the second receive signal characteristics;
providing 503 a transmitter 207, 307 having a transmitter loop 208 and transmitting 504 from the transmitter 207, 307 to the vehicle communication device via the transmitter loop 208 a first telegram signal in a Frequency Shift Keying FSK operational mode or a second telegram signal in a Amplitude Shift Keying ASK operational mode;
providing 505 in the transmitter 207, 307 a variable capacitance 425, which forms a resonant circuit 409 together with the transmitter loop 208, 408a, an active feedback circuitry 316, 416, 317, 417, 318 having an input 428c and an output 318a both coupled to the resonant circuit 309, 409, and a switch 426 selectively short-circuiting the input 428c of the active feedback circuitry 316, 416, 317, 417, 318 to render the active feedback circuitry 316, 416, 317, 417, 318 inactive;
providing 506 a controller 211 varying the variable capacitance 425 of the transmitter to operate 507a in the FSK operational mode or switching to short-circuit the input 428c of the active feedback circuitry to operate 508a in the ASK operational mode;
operating (507b) the balise (101, 201) in FSK operational mode (according to Eurobalise specification) in case the receive signal has first receive signal characteristics of no modulation;
operating (508b) the balise (101, 201) according to in ASK operational mode (according to KER balise specification) in case the receive signal has second receive signal characteristics of non-toggling modulation.

An embodiment includes a railway infrastructure 101, 102a, 102b for railway vehicles, said railway infrastructure 101, 102a, 102b comprising rails 102a, sleepers 102b and a plurality of balises 101, 201 of the type disclosed above arranged fixedly on the sleepers 102b.

## Claims

1. A balise (101, 201) suitable to be arranged fixedly between rails (102a) of a railway track to communicate wirelessly with a vehicle communication device of a railway vehicle on the railway track, the balise (101, 201) comprising:
a receiver (203) having a receiver loop (204) and being configured to receive from the vehicle communication device via the receiver loop (204) a receive signal having first receive signal characteristics or second receive signal characteristics different to said first receive signal characteristics;
the receiver (203) having energy storage circuitry (205) configured to tap energy from the receive signal for powering the balise (101, 201) and having a detector (206) configured to provide an indication of whether the receive signal has the first receive signal characteristics or the second receive signal characteristics;
a transmitter (207, 307) having a transmitter loop (208) and being configured to transmit to the vehicle communication device via the transmitter loop (208) a first telegram signal in a Frequency Shift Keying, FSK, operational mode according to the Eurobalise specification, or a second telegram signal in an Amplitude Shift Keying, ASK, operational mode according to the KER/KVB specification; **characterized by** said balise further comprising:
the transmitter (207, 307) having a variable capacitance (425), which forms a resonant circuit (209, 309, 409) together with the transmitter loop (208, 408a), an active feedback circuitry (316, 416, 317, 417, 318) having an input and an output both coupled to the resonant circuit (209, 309, 409), and a switch (426) to selectively short-circuit the input (428a) of the active feedback circuitry (316, 416, 317, 417, 318) to render the active feedback circuitry inactive;
a controller (211) configured to cause variation of the variable capacitance (425) of the transmitter to attain the FSK operational mode and to cause the switch (426) to short-circuit the input (428a) of the active feedback circuitry (316, 416, 317, 417, 318) to attain the ASK operational mode.

2. The balise of claim 1, further comprising:
the switch (426) having a solid-state switch component to short-circuit the input (428c) of the active feedback circuitry (316, 416, 317, 417, 318).

3. The balise of any preceding claim, further comprising:
the switch (426) having a field effect transistor to short-circuit the input of the input of the active feedback circuitry (316, 416, 317, 417, 318).

4. The balise of any preceding claim, further comprising:
the active feedback circuitry (316, 416, 317, 417, 318) including a limiter (316, 416) configured to limit and stabilize oscillation amplitudes in the resonant circuit (209, 309, 409).

5. The balise of any preceding claim, further comprising:
the active feedback circuitry (316, 416, 317, 417, 318) having at its input (428c) a capacitance (428b) in series between the resonant circuit (209, 309, 409) and the switch (426).

6. The balise of any preceding claim, further comprising:
the switch (426) being configured when short-circuiting the input (428c) to couple the input to signal ground.

7. The balise of any preceding claim, further comprising:
the controller (211) being configured to attain the FSK operational mode in response to the detector (206) providing the indication that the receive signal has the first receive signal characteristics.

8. The balise of claim 7, further comprising:
the receive signal detectably having no modulation implying that the receive signal has the first receive signal characteristics.

9. The balise of any preceding claim, further comprising:
the controller (211) being configured to attain the ASK operational mode in response to the detector (206) provides the indication that the receive signal has the second receive signal characteristics.

10. The balise of claim 9, further comprising:
the receive signal detectably having non-toggling modulation implying that the receive signal has the second receive signal characteristics.

11. The balise of any preceding claim, further comprising:
the receive signal detectably having toggling modulation implying that the receive signal has the first receive signal characteristics.

12. The balise of any of claims 1-10, further comprising:
the receive signal detectably having toggling modulation implying that the receive signal has the second receive signal characteristics.

13. A method of operating a balise (101, 201) to be arranged fixedly between rails (102a) of a railway track to wirelessly communicate with a vehicle communication device of a railway vehicle on the railway track, the method comprising:
providing (501) a receiver (203) having a receiver loop (204) and receiving in the receiver (203) from the vehicle communication device via the receiver loop (204) a receive signal having first receive signal characteristics or second receive signal characteristics different to said first receive signal characteristics;
providing (502) in the receiver (203) a detector (206) providing an indication of whether the receive signal has the first receive signal characteristics or the second receive signal characteristics;
providing (503) a transmitter (207, 307) having a transmitter loop (208) and transmitting (504) from the transmitter (207, 307) to the vehicle communication device via the transmitter loop (208) a first telegram signal in a Frequency Shift Keying (FSK) operational mode according to the Eurobalise specification or a second telegram signal in an Amplitude Shift Keying (ASK) operational mode according to the KER/KVB specification;
**characterised by**
providing (505) in the transmitter (207, 307) a variable capacitance (425), which forms a resonant circuit (409) together with the transmitter loop (208, 408a), an active feedback circuitry (316, 416, 317, 417, 318) having an input (428c) and an output (318a) both coupled to the resonant circuit (309, 409), and a switch (426) selectively short-circuiting the input (428c) of the active feedback circuitry (316, 416, 317, 417, 318) to render the active feedback circuitry (316, 416, 317, 417, 318) inactive;
providing (506) a controller (211) varying the variable capacitance (425) of the transmitter to operate (507a) in the FSK operational mode or switching to short-circuit the input (428c) of the active feedback circuitry to operate (508a) in the ASK operational mode.

14. The method of claim 13, comprising:
operating (507b) the balise (101, 201 in FSK operational mode in case the receive signal has first receive signal characteristics of no modulation;
operating (508b) the balise (101, 201) according to in ASK operational mode in case the receive signal has second receive signal characteristics of non-toggling modulation.

15. A railway infrastructure (101, 102a, 102b) for railway vehicles, said railway infrastructure (101, 102a, 102b) comprising rails (102a), sleepers (102b) and a plurality of balises (101, 201) according to any of claims 1-12 fixedly arranged in a corresponding plurality of locations between the rails (102a).

## Patentansprüche

1. Balise (101, 201), geeignet zum festen Anordnen zwischen Schienen (102a) einer Gleisanlage zur drahtlosen Kommunikation mit einer Fahrzeugkommunikationsvorrichtung eines Schienenfahrzeugs auf der Gleisanlage, wobei die Balise (101, 201) umfasst:
einen Empfänger (203) mit einer Empfängerschleife (204) und konfiguriert zum Empfangen eines erste Empfangssignalcharakteristiken oder von den ersten Empfangssignalcharakteristiken sich unterscheidende zweite Empfangssignalcharakteristiken aufweisenden Empfangssignals von der Fahrzeugkommunikationsvorrichtung über die Empfängerschleife (204);
wobei der Empfänger (203) eine zum Abgreifen von Energie aus dem Empfangssignal zum Versorgen der Balise (101, 201) mit Energie konfigurierte Energiespeicherschaltung (205) aufweist und einen zum Vorsehen einer Anzeige, ob das Empfangssignal die ersten Empfangssignalcharakteristiken oder die zweiten Empfangssignalcharakteristiken aufweist, konfigurierten Detektor (206) aufweist;
einen Sender (207, 307) mit einer Senderschleife (208) und konfiguriert zum Übertragen eines ersten Telegrammsignals in einem Frequenzmodulations-FSK-Betriebsmodus gemäß der Eurobalise-Spezifikation oder eines zweiten Telegrammsignals in einem Amplitudenmodulations-ASK-Betriebsmodus gemäß der KER/KVB-Spezifikation zu der Fahrzeugkommunikationsvorrichtung über die Senderschleife (208); **dadurch gekennzeichnet, dass** die Balise ferner umfasst:
dass der Sender (207, 307) eine zusammen mit der Senderschleife (208, 408a) einen Resonanzkreis (209, 309, 409) bildende veränderbare Kapazität (425) aufweist, eine aktive Rückkopplungsschaltung (316, 416, 317, 417, 318) mit einem Eingang und einem Ausgang, beide gekoppelt mit dem Resonanzkreis (209, 309, 409), aufweist und einen Schalter (426) zum wahlweisen Kurzschließen des Eingangs (428a) der aktiven Rückkopplungsschaltung (316, 416, 317, 417, 318) zum Deaktivieren der aktiven Rückkopplungsschaltung aufweist;
eine Steuervorrichtung (211), konfiguriert zum Bewirken einer Veränderung der veränderbaren Kapazität (425) des Senders, um den FSK-Betriebsmodus einzurichten, und zum Bewirken, dass der Schalter (426) den Eingang (428a) der aktiven Rückkopplungsschaltung (316, 416, 317, 417, 318) kurzschließt, um den ASK-Betriebsmodus einzurichten.

2. Balise nach Anspruch 1, ferner umfassend:
dass der Schalter (426) eine Festkörper-Schaltkomponente aufweist zum Kurzschließen des Eingangs (428c) der aktiven Rückkopplungsschaltung (316, 416, 317, 417, 318).

3. Balise nach einem der vorangehenden Ansprüche, ferner umfassend:
dass der Schalter (426) einen Feldeffekttransistor aufweist zum Kurzschließen des Eingangs des Eingangs der aktiven Rückkopplungsschaltung (316, 416, 317, 417, 318)

4. Balise nach einem der vorangehenden Ansprüche, ferner umfassend:
dass die aktive Rückkopplungsschaltung (316, 416, 317, 417, 318) einen Begrenzer (316, 416) umfasst, konfiguriert zum Begrenzen und Stabilisieren von Oszillationsamplituden der Resonanzschaltung (209, 309, 409).

5. Balise nach einem der vorangehenden Ansprüche, ferner umfassend:
dass die aktive Rückkopplungsschaltung (316, 416, 317, 417, 318) an ihrem Eingang (428c) eine Kapazität (428b) in Reihe zwischen der Resonanzschaltung (209, 309, 409) und dem Schalter (426) umfasst.

6. Balise nach einem der vorangehenden Ansprüche, ferner umfassend:
dass der Schalter (426) dazu konfiguriert ist, beim Kurzschließen des Eingangs (428c) den Eingang mit einer Signalmasse zu koppeln.

7. Balise nach einem der vorangehenden Ansprüche, ferner umfassend:
dass die Steuervorrichtung (211) dazu konfiguriert ist, den FSK-Betriebsmodus in Antwort darauf einzurichten, dass der Detektor (206) die Anzeige vorsieht, dass das Empfangssignal die ersten Empfangssignalcharakteristiken aufweist.

8. Balise nach Anspruch 7, ferner umfassend:
dass dann, wenn das Empfangssignal erfassbar keine Modulation aufweist, impliziert ist, dass das Empfangssignal die ersten Empfangssignalcharakteristiken aufweist.

9. Balise nach einem der vorangehenden Ansprüche, ferner umfassend:
dass die Ansteuervorrichtung (211) dazu konfiguriert ist, den ASK-Betriebsmodus in Antwort darauf einzurichten, dass der Detektor (206) die Anzeige vorsieht, dass das Empfangssignal die zweiten Empfangssignalcharakteristiken aufweist.

10. Balise nach Anspruch 9, ferner umfassend:
dass dann, wenn das Empfangssignal erfassbar eine Nicht-Umschalt-Modulation aufweist, impliziert ist, dass das Empfangssignal die zweiten Empfangssignalcharakteristiken aufweist.

11. Balise einem der vorangehenden Ansprüche, ferner umfassend:
dass dann, wenn das Empfangssignal erfassbar eine Umschalt-Modulation aufweist, impliziert ist, dass das Empfangssignal die ersten Empfangssignalcharakteristiken aufweist.

12. Balise nach einem der Ansprüche 1-10, ferner umfassend:
dass dann, wenn das Empfangssignal erfassbar eine Umschalt-Modulation aufweist, impliziert ist, dass das Empfangssignal die zweiten Empfangssignalcharakteristiken aufweist.

13. Verfahren zum Betreiben einer fest zwischen den Schienen (102a) einer Gleisanlage zur drahtlosen Kommunikation mit einer Fahrzeugkommunikationsvorrichtung eines Schienenfahrzeugs auf der Gleisanlage anzuordnenden Balise (101, 201), wobei das Verfahren umfasst:
Vorsehen (501) eines Empfängers (203) mit einer Empfängerschleife (204) und Empfangen eines Empfangssignals mit ersten Empfangssignalcharakteristiken oder sich von den ersten Empfangssignalcharakteristiken unterscheidenden zweiten Empfangssignalcharakteristiken in dem Empfänger (203) von der Fahrzeugkommunikationsvorrichtung über die Empfängerschleife (204);
in dem Empfänger (203), Vorsehen (502) eines eine Anzeige, ob das Empfangssignal die ersten Empfangssignalcharakteristiken oder die zweiten Empfangssignalcharakteristiken aufweist, vorsehenden Detektors (206);
Vorsehen (503) eines Senders (207, 307) mit einer Senderschleife (208) und Senden (504) eines ersten Telegrammsignals in einem Frequenz-modulations-(FSK)-Betriebsmodus gemäß der Eurobalise-Spezifikation oder eines zweiten Telegrammsignals in einem Amplitudenmodulations-(ASK)-Betriebsmodus gemäß der KER/KVB-Spezifikation von dem Sender (207, 307) zu der Fahrzeugkommunikationsvorrichtung über die Senderschleife (208);
**gekennzeichnet durch**
in dem Sender (207, 307), Vorsehen (505) einer veränderbaren Kapazität (425), welche zusammen mit der Senderschleife (208, 408a) eine Resonanzschaltung (409) bildet, einer aktiven Rückkopplungsschaltung (316, 416, 317, 417, 318) mit einem Eingang (428c) und einem Ausgang (318a), beide mit der Resonanzschaltung (309, 409) gekoppelt, und eines den Eingang (428c) der aktiven Rückkopplungsschaltung (316, 416, 317, 417, 318) zum Deaktivieren der aktiven Rückkopplungsschaltung (316, 416, 317, 417, 318) wahlweise kurzschließenden Schalters (426);
Vorsehen (506) einer Steuervorrichtung (211), welche die veränderbare Kapazität (425) des Senders verändert, um in dem FSK-Betriebsmodus zu arbeiten (507a), oder zum Kurzschließen des Eingangs (428c) der aktiven Rückkopplungsschaltung schaltet, um in dem ASK- Betriebsmodus zu arbeiten (508a).

14. Verfahren nach Anspruch 13, umfassend:
Betreiben (507b) der Balise (101, 201) in dem FSK-Betriebsmodus, wenn das Empfangssignal erste Empfangssignalcharakteristiken ohne Modulation aufweist,
Betreiben (508b) der Balise (101, 201) entsprechend dem ASK-Betriebsmodus, wenn das Empfangssignal zweite Empfangssignalcharakteristiken mit einer Nicht-Umschalt-Modulation aufweist.

15. Gleisinfrastruktur (101, 102a, 102b) für Schienenfahrzeuge, wobei die Gleisinfrastruktur (101, 102a, 102b) Schienen (102a), Schwellen (102b) und eine Mehrzahl von Balisen (101, 201) nach einem der Ansprüche 1-12 fest angeordnet an einer Mehrzahl von Orten zwischen den Schienen (102a) umfasst.

## Revendications

1. Une balise (101, 201) appropriée à être disposée de manière fixe entre les rails (102a) d'une voie ferrée pour communiquer sans fil avec un dispositif de communication de véhicule d'un véhicule ferroviaire sur la voie ferrée, la balise (101, 201) comprenant :
un récepteur (203) comprenant une boucle de récepteur (204) et étant configuré pour recevoir du dispositif de communication de véhicule via la boucle de récepteur (204) un signal de réception ayant des premières caractéristiques de signal de réception ou des deuxièmes caractéristiques de signal de réception différentes desdites premières caractéristiques de signal de réception ;
le récepteur (203) comprenant un système de circuits de stockage d'énergie (205) conçu pour prélever de l'énergie à partir du signal de réception pour alimenter la balise (101, 201) et ayant un détecteur (206) configuré pour fournir une indication du fait que le signal de réception a les premières caractéristiques de signal de réception ou les caractéristiques de deuxième signal de réception ;
un émetteur (207, 307) ayant une boucle d'émetteur (208) et étant configuré pour émettre vers le dispositif de communication de véhicule via la boucle d'émetteur (208) un premier signal de télégramme dans un mode opérationnel de modulation par déplacement de fréquence, FSK, conformément à la spécification Eurobalise, ou un deuxième signal de télégramme dans un mode opérationnel de modulation par déplacement d'amplitude, ASK, conformément à la spécification KER/KVB ; **caractérisé par** ladite balise en outre :
l'émetteur (207, 307) ayant une capacité variable (425), qui forme un circuit résonnant (209, 309, 409) conjointement avec la boucle d'émetteur (208, 408a), un système de circuits de rétroaction actif (316, 416, 317, 417, 318) ayant une entrée et une sortie couplées au circuit résonnant (209, 309, 409), et un commutateur (426) pour court-circuiter de manière sélective l'entrée (428a) du système de circuits de rétroaction actif (316, 416, 317, 417, 318) pour rendre le système de circuits de rétroaction actif inactif ;
un dispositif de commande (211) configuré pour provoquer la variation de la capacité variable (425) de l'émetteur pour atteindre le mode de fonctionnement FSK et pour amener le commutateur (426) à court-circuiter l'entrée (428a) du système de circuits de rétroaction actif (316, 416, 317, 417, 318) pour atteindre le mode opérationnel ASK.

2. Balise selon la revendication 1, comprenant en outre :
le commutateur (426) ayant un composant de commutateur à semiconducteur pour court-circuiter l'entrée (428c) du système de circuits de rétroaction actif (316, 416, 317, 417, 318).

3. Balise selon l'une quelconque des revendications précédentes, comprenant en outre :
le commutateur (426) ayant un transistor à effet de champ pour court-circuiter l'entrée de l'entrée de système de circuits de rétroaction actif (316, 416, 317, 417, 318).

4. Balise selon l'une quelconque des revendications précédentes, comprenant en outre :
le système de circuits de rétroaction actif (316, 416, 317, 417, 318) comprenant un limiteur (316, 416) configuré pour limiter et stabiliser les amplitudes d'oscillation dans le circuit résonant (209, 309, 409).

5. Balise selon l'une quelconque des revendications précédentes, comprenant en outre :
le système de circuits de rétroaction actif (316, 416, 317, 417, 318) ayant à son entrée (428c) une capacité (428b) en série entre le circuit de commutation (209, 309, 409) et le commutateur (426) .

6. Balise selon l'une quelconque des revendications précédentes, comprenant en outre :
le commutateur (426) étant configuré lors du court-circuitage de l'entrée (428c) pour coupler l'entrée à la masse de signal.

7. Balise selon l'une quelconque des revendications précédentes, comprenant en outre :
le dispositif de commande (211) étant configuré pour atteindre le mode opérationnel FSK en réponse au fait que le détecteur (206) fournit l'indication que le signal de réception a les caractéristiques du premier signal de réception.

8. Balise selon la revendication 7, comprenant en outre :
le signal de réception n'ayant pas de modulation détectable impliquant que le signal de réception ait les premières caractéristiques de signal de réception.

9. Balise selon l'une quelconque des revendications précédentes, comprenant en outre :
le dispositif de commande (211) étant configuré pour atteindre le mode opérationnel ASK en réponse au détecteur (206) fournit l'indication que le signal de réception a les caractéristiques du deuxième signal de réception.

10. Balise selon la revendication 9, comprenant en outre :
le signal de réception détectable présente une modulation non basculante impliquant que le signal de réception a les caractéristiques du deuxième signal de réception.

11. Balise selon l'une quelconque des revendications précédentes, comprenant en outre :
le signal de réception détectable ayant de manière détectable une modulation basculante impliquant que le signal de réception a les caractéristiques du premier signal de réception.

12. Balise selon l'une quelconque des revendications 1 à 10, comprenant en outre :
le signal de réception ayant de manière détectable une modulation de basculement impliquant que le signal de réception ait les caractéristiques du deuxième signal de réception.

13. Procédé de mise en œuvre d'une balise (101, 201) destinée à être agencée fixement entre des rails (102a) d'une voie ferrée pour communiquer sans fil avec un dispositif de communication de véhicule d'un véhicule ferroviaire sur la voie ferrée, le procédé comprenant :
la fourniture (501) d'un récepteur (203) ayant une boucle de récepteur (204) et la réception dans le récepteur (203) depuis le dispositif de communication de véhicule via la boucle de récepteur (204) d'un signal de réception ayant des caractéristiques de premier signal de réception ou des caractéristiques de deuxième signal de réception différentes desdites caractéristiques de premier signal de réception ;
la fourniture (502) dans le récepteur (203) d'un détecteur (206) fournissant une indication du fait que le signal de réception a les premières caractéristiques de signal de réception ou les deuxièmes caractéristiques de signal de réception ;
la fourniture (503) d'un émetteur (207, 307) ayant un émetteur boucle (208) et la transmission (504) de l'émetteur (207, 307) au dispositif de communication de véhicule via la boucle d'émetteur (208) d'un premier signal de télégramme dans un mode opérationnel de modulation par déplacement de fréquence (FSK) selon la spécification Eurobalise ou d'un deuxième signal de télégramme dans un mode opérationnel de modulation par déplacement d'amplitude (ASK) selon la spécification KER/KVB ;
**caractérisé par**
la fourniture (505) dans l'émetteur (207, 307) une capacité variable (425), qui forme un circuit résonnant (409) avec la boucle d'émetteur (208, 408a), un système de circuits de rétroaction actif (316, 416, 317, 417, 318) ayant une entrée (428c) et une sortie (318a) toutes deux couplées au circuit résonant (309, 409), et un commutateur (426) court-circuitant sélectivement l'entrée (428c) du système de circuits de rétroaction actif (316, 416, 317, 417, 318) pour rendre le système de circuits de rétroaction actif (316, 416, 317, 417, 318) inactif ;
la fourniture (506) d'un dispositif de commande (211) faisant varier la capacité variable (425) de l'émetteur pour fonctionner (507a) dans le mode opérationnel FSK ou la commutation pour court-circuiter l'entrée (428c) du système de circuits de rétroaction actif pour fonctionner (508a) dans le mode opérationnel ASK.

14. Procédé selon la revendication 13, comprenant :
l'exploitation (507b) de la balise (101, 201 en mode opérationnel FSK dans le cas où le signal de réception a des caractéristiques de premier signal de réception de non modulation :
l'exploitation (508b) de la balise (101, 201) selon le mode opérationnel ASK dans le cas où le signal de réception a des caractéristiques de deuxième signal de réception de modulation non basculante.

15. Infrastructure ferroviaire (101, 102a, 102b) pour véhicules ferroviaires, ladite infrastructure ferroviaire (101, 102a, 102b) comprenant des rails (102a), des traverses (102b) et une pluralité de balises (101, 201) selon l'une quelconque des revendications 1 à 12 disposées de manière fixe dans une pluralité correspondante d'emplacements entre les rails (102a).
